# EUROPÄISCHE PATENTSCHRIFT

(11) **EP 1 468 401 B1**
(45) Veröffentlichungstag und Bekanntmachung des Hinweises auf die Patenterteilung: **19.02.2020**
(21) Anmeldenummer: 02792609.6
(22) Anmeldetag: 22.11.2002
(51) Int. Cl.: G06T 7/40, B60S 1/08

(54) **VERFAHREN UND VORRICHTUNG ZUR ERKENNUNG VON SICHTBEHINDERUNGEN BEI BILDSENSORSYSTEMEN**
METHOD AND DEVICE FOR RECOGNIZING OBSTRUCTIONS OF VIEW IN IMAGE SENSOR SYSTEMS
PROCEDE ET DISPOSITIF DE DETECTION D'OBSTACLES A LA VISIBILITE DANS LE CAS DE SYSTEMES DE DETECTION D'IMAGES

(30) Priorität: 17.01.2002 DE 10201522
(43) Veröffentlichungstag der Anmeldung: 20.10.2004
(73) Patentinhaber: ROBERT BOSCH GMBH, 70442 Stuttgart (DE)
(72) Erfinder: FRANZ, Matthias, 72074 Tuebingen (DE)
(86) Internationale Anmeldenummer: PCT/DE2002/004290
(87) Internationale Veröffentlichungsnummer: WO 2003/060826

(56) Entgegenhaltungen:
- WO-A1-03/016111
- DE-A- 10 104 734
- US-A- 4 350 884
- US-A- 5 170 202
- US-A- 6 097 024
- PATENT ABSTRACTS OF JAPAN vol. 009, no. 067 (M-366), 27. März 1985 (1985-03-27) & JP 59 199347 A (NIPPON DENSO KK), 12. November 1984 (1984-11-12)

## Beschreibung

### Stand der Technik

Die Erfindung betrifft ein Verfahren und eine Vorrichtung zur Erkennung von Sichtbehinderungen bei Bildsensorsystemen. Zukünftig werden insbesondere in Verbindung mit der Umfeldsensierung von Kraftfahrzeugen Bildsensoren, beispielsweise Videokameras, eingesetzt, deren Bild von nachfolgenden Funktionen (beispielsweise Fahrerassistenzfunktionen) ausgewertet wird. Daher ist es von besonderer Bedeutung, Sichtbehinderungen, die das vom Bildsensor ermittelte Bild verschlechtern, zu erkennen, die nachfolgenden Funktionen oder Systeme über das Vorhandensein solcher Sichtbehinderungen zu informieren und gegebenenfalls Gegenmaßnahmen einzuleiten.

Aus der JPS59199347 ist ein Steuerungssystem für eine Scheibenwischanlage bekannt, in welchem ein Unschärfemaß berechnet wird. Wenn die berechnete Unschärfe einen vorgeschriebenen Wert erreicht oder darüber liegt, muss die Windschutzscheibe gewischt werden, und es wird ein entsprechendes Steuersignal an das Steuerungssystem der Scheibenwischanlage ausgegeben. Aus der US 6,097,024 ist ein Fahrzeugwindschutzscheiben-Feuchtigkeitserfassungssystem mit einem Bildsensor und einer Linse bekannt, wobei die Linse so positioniert ist, dass sie die Oberflache der Windschutzscheibe auf den Bildsensor abbildet und wobei ein Verarbeitungssystem mit dem Bildsensor in Verbindung steht, wobei das Verarbeitungssystem so arbeitet, dass es Bilder aus dem Bildsensor analysiert, um Feuchtigkeit zu erfassen.

Aus der WO 03/016111 A1 ist ein Transmissionsdetektor für die Windschutzscheibe eines Kraftfahrzeugs bekannt.

### Vorteile der Erfindung

Durch die Detektion der Unschärfe des aufgenommenen Bildes ergibt sich eine geeignete Vorgehensweise, mit deren Hilfe Sichtbehinderungen erkannt werden. Besonders vorteilhaft ist, dass nachfolgende Systeme oder Funktionen, die nur bei ausreichender Sicht bestimmungsgemäß funktionieren, über das Vorhandensein der Sichtbehinderung informiert werden und so geeignete Gegenmaßnahmen einleiten können. So wird in vorteilhafter Weise bei erkannter Sichtbehinderung je nach Ausgestaltung der nachfolgenden Funktion bzw. des nachfolgenden Systems das aufgenommene Bild nicht ausgewertet, korrigiert oder andere geeignete Maßnahmen ergriffen, wie beispielsweise das Einschalten der Scheibenwischanlage oder das Einschalten einer Scheibenheizung.

Besonders vorteilhaft ist, dass Sichtbehinderungen aufgrund des Bildsignals selbst erkannt werden, so dass keine zusätzlichen Sensoren benötigt werden.

In besonderem Maße eignet sich die Vorgehensweise zur Erkennung von Sichtbehinderung auf der Scheibe des Kraftfahrzeugs.

In vorteilhafter Weise übernimmt der Bildsensor weitere Funktionen wie beispielsweise die Funktion eines Regensensors, so dass dieser bei der Ausstattung des Fahrzeugs mit derartigen bildsensorbasierten Fahrerassistenzfunktionen, beispielsweise Spurwarner, etc. eingespart werden kann.

In besonders vorteilhafter Weise wird die nachfolgend beschriebene Vorgehensweise bei Videosensorsystemen in Kraftfahrzeugen eingesetzt, die nicht auf die Fahrzeugscheibe fokussiert sind, sondern auf den Außenbereich fokussiert sind. Daher läßt sich die nachfolgend beschriebene Vorgehensweise mit besonderen Vorteilen in Verbindung mit der Sensierung des Umfeldes eines Kraftfahrzeugs einsetzen. Auf diese Weise kann der Bildsensor für mehrere Anwendungen (z.B. Regensensor und Objektdetektion, etc.) eingesetzt werden.

Vorteilhaft ist ferner, dass der Bildsensor in die Lage versetzt wird, anhand des eigenen Ausgangssignals seine Funktionsfähigkeit zu überprüfen, d.h. festzustellen, ob die momentanen Sichtbedingungen für die nachfolgend durchzuführende Funktion, z.B. für eine Spurhaltung, ausreichen. In vorteilhafter Weise wird bei einer Funktionsunfähigkeit des Bildsensors dies dem Fahrer oder dem nachfolgenden System signalisiert und/oder Gegenmaßnahmen ergriffen.

In besonders vorteilhafter Weise hat sich gezeigt, dass die Detektion von Sichtbehinderungen durch Messung der Unschärfe des abgebildeten Bildes ermittelt wird. Dadurch wird ein zuverlässiges Verfahren zur Ermittlung von Sichtbehinderungen, insbesondere von Objekten auf einer Fahrzeugscheibe, die unscharf im Bild abgebildet sind, bereitgestellt. Besonders vorteilhaft ist, dass durch die Messung der Unschärfe des Bildes transparente Objekte wie z.B. Regentropfen oder halbtransparente Objekte wie Eis oder Staub erkannt werden können, in einer besonderen Ausführungsform sogar unterschieden werden können.

In vorteilhafter Weise ist es daher auch ermöglicht, Hinweise auf die Art der Sichtbehinderungen zu gewinnen. Damit kann spezifisch auf die jeweilige Art der Sichtbehinderung reagiert werden, beispielsweise durch automatisches Zuschalten der Scheibenwaschanlage bei einer durch Partikel hervorgerufenen Verschmutzung der Windschutzscheibe.

Weitere Vorteile ergeben sich aus der nachfolgenden Beschreibung aus Ausführungsbeispielen bzw. aus den abhängigen Patentansprüchen.

### Zeichnung

Die Erfindung wird nachstehend anhand der in der Zeichnung dargestellten Ausführungsformen näher erläutert.

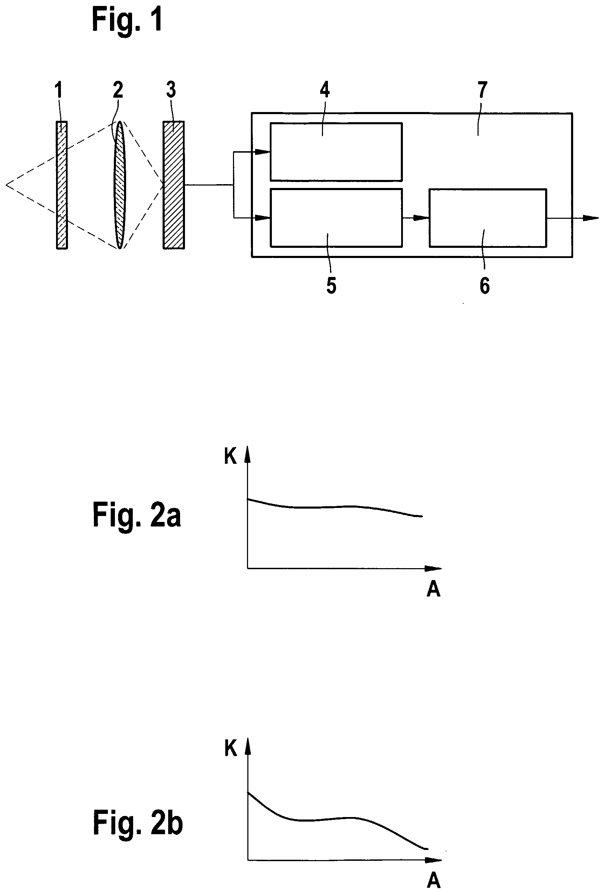

Figur 1 zeigt ein Übersichtsbild eines Bildsensorsystems, in welchem die nachfolgend beschriebene Vorgehensweise zur Bestimmung von Sichtbehinderungen realisiert ist. In den Figuren 2 bis 4 sind Diagramme dargestellt, anhand derer drei verschiedene Ausführungen zur Bestimmung der Unschärfe im Bild und die daraus abgeleitete Erkennung von Sichtbehinderungen beschrieben werden.

### Beschreibung von Ausführungsbeispielen

Das in Figur 1 dargestellt Bildsensorsystem besteht im Wesentlichen aus einem optischen Sensorarray, welches an eine Datenverarbeitungseinheit 7, beispielsweise ein Mikroprozessor, angeschlossen ist. Über ein Linsensystem 2 wird die momentan sichtbare Szene auf das Sensorarray abgebildet. Der Bildsensor ist dabei hinter einer Scheibe 1 angebracht, und auf den Außenraum hinter der Scheibe fokussiert. Die Scheibe ist beispielsweise die Scheibe eines Fahrzeugs, insbesondere dessen Windschutzscheibe. Durch die Fokussierung auf den Au-ßenraum des Fahrzeugs kann das Bildsensorsystem auch für andere Bildverarbeitungsaufgaben, beispielsweise zur Fahrspur- oder Hindernisdetektion eingesetzt werden. Die Auswerteeinheit 7 besteht aus einem Modul zur Belichtungssteuerung 4 des Sensorarrays, einer Meßeinheit für die Unschärfeschätzung 5 und einem Entscheidungsmodul 6, das über das Vorliegen und gegebenenfalls über die Art einer Sichtbehinderung entscheidet. In einem bevorzugten Ausführungsbeispiel sind alle diese Module Teile eines Mikroprozessors, wobei die Module als Softwareprogramme realisiert sind. In anderen Ausführungen sind die Module einzelne Komponenten (Prozessoren), ebenfalls als Softwarerealisierung, wobei beispielsweise Unschärfeschätzung in einer Komponente und Entscheidung in einer anderen Komponente durchgeführt werden. Die vom Entscheidungsmodul 6 getroffene Entscheidung wird dann als Informations- und/oder Aktivierungssignal an nachfolgende Funktionen und/oder Systeme weitergegeben. Anwendungsmöglichkeiten hierfür sind nachfolgend näher ausgeführt.

Die automatische Detektion von Sichtbehinderungen auf den Scheiben eines Fahrzeugs spielt deshalb eine zunehmend wichtige Rolle, weil beim Einsatz von Bildsensoren im Fahrzeug Systeme, die die Bilder des Sensors auswerten, nur bei ausreichender Sicht bestimmungsgemäß funktionieren. Liegt eine Information über die Sichtbehinderung und im Idealfall über die Art der Sichtbehinderung vor, so ist ein solches System in der Lage, dem Fahrer seine momentane Funktionsunfähigkeit anzuzeigen und/oder Gegenmaßnahmen zu ergreifen, wie das Einschalten der Wischanlage, einer Scheibenheizung, einer Scheibenreinigungsanlage, etc.

Bei der Bestimmung von Sichtbehinderungen aufgrund des Bildsensorsignals allein stellt sich das Problem, dass sich Sichtbehinderungen auf einer Fahrzeugscheibe im Bild nur indirekt bemerkbar machen, da für die Anwendung bei Fahrerassistenzsystemen der Bildsensor auf den Außenbereich des Fahrzeugs fokussiert ist. Objekte auf der Scheibe, beispielsweise Regentropfen oder Staub, werden daher unscharf abgebildet. Diese Sichtbehinderungen machen sich also durch eine charakteristischen Unschärfeverteilung im Bildsignal bemerkbar.

Die Detektion von Sichtbehinderungen basiert auf einer Messung der Unschärfe des durch einen Bildsensor aufgenommenen Bildes. Diese Unschärfe macht sich in einer Unschärfe der abgebildeten Konturen der momentan sichtbaren Szene bemerkbar. Objekte, die auf der Scheibe liegen, werden aufgrund der Fokussierung des Bildsensors auf den Außenbereich unscharf abgebildet. Transparente Objekte wie beispielsweise Regentropfen führen zu einer lokalen Defokussierung des Bildes, halbtransparente Objekte wie Eis oder Staub streuen einfallende Lichtstrahlen. Beide Effekte führen zu einer Erhöhung der Unschärfe im Sensorsignal. Die Auswerteeinheit, die dem Bildsensor, einem optischen Sensorarray, beispielsweise einer CCD- oder C-MOS-Kamera zugeordnet ist, erfaßt die Unschärfeverteilung der momentan abgebildeten Szene. Aufgrund der erfaßten Unschärfeverteilung wird auf das Vorliegen einer Sichtbehinderung geschlossen. Zur Ermittlung der Unschärfe wird eines der nachfolgend beschriebenen Verfahren der digitalen Bildverarbeitung eingesetzt.

In einem bevorzugten Ausführungsbeispiel ist der Bildsensor ein Sensorarray, mit dessen Hilfe sich auch Hinweise auf die Art der Sichtbehinderung gewinnen lassen. Dies unterscheidet ein solches Sensorarray wesentlich von einem nach dem Reflexionsprinzip arbeitenden herkömmlichen Regensensor. Aufgrund der Verwendung eines Sensorarrays kann auf die ermittelte Sichtbehinderung spezifisch reagiert werden, etwa durch zusätzliches Einschalten einer Scheibenwaschanlage bei einer durch Partikel hervorgerufenen Verschmutzung. Eine bevorzugte Vorgehensweise für die Erkennung der Art der Sichtbehinderung wird nachfolgend ebenfalls im Detail beschrieben.

Eine erste Möglichkeit zur Messung der Unschärfe ist anhand der Diagramme der Figur 2 dargestellt. Die Messung der Unschärfe erfolgt hier über das sogenannte Kontrastspektrum. Das diesem Verfahren zugrundeliegenden Prinzip ist aus der digitalen Bildverarbeitung bekannt. Zur Gewinnung des Kontrastspektrums wird zunächst eine sogenannte Multiskalenanalyse durchgeführt, bei der das Videobild über die wiederholte Anwendung einer Glättungsoperation und anschliessender Unterabtastung in mehrere Bilder mit abnehmender Auflösung zerlegt wird. In jeder Auflösungsstufe wird ein globales Kontrastmaß berechnet, beispielsweise die Standardabweichung der Intensitätswerte im Bild. Das Kontrastmaß, aufgetragen über der Auflösung, bildet das Kontrastspektrum des Bildes. Beispiele für derartige Kontrastspektren zeigen die Figuren 2a und 2b. Dort ist jeweils das Kontrastmaß K des Bildes über der Auflösung A aufgetragen. Scharfe und unscharfe Bilder unterscheiden sich in ihren Kontrastspektren dadurch, dass der Kontrast in unscharfen Bildern mit zunehmender Auflösung stärker abfällt als in scharfen Bildern. Dies deshalb, weil feine Details durch Sichtbehinderungen stärker beeinträchtigt werden als grobe Bildmerkmale. Somit ist der Abfall des Kontrastspektrums ein Maß für die Unschärfe des Bildes. Beispielhafte Situationen sind in den Figuren 2a und 2b gezeigt. In Figur 2a ist ein Kontrastspektrum über der Auflösung des Bildes bei einem Bild mit geringer Unschärfe dargestellt, während in Figur 2b die Situation bei einer hohen Bildunschäfe (unscharfes Bild) gezeigt wird.

Bei einer Realisierung der Vorgehensweise zur Bestimmung der Unschärfe des Bildes wird im Rahmen eines Rechnerprogramms das Kontrastspektrum nach Maßgabe der Multiskalenanalyse aufgenommen und eine Größe ermittelt, beispielsweise die mittlere Steigung des Kontrastmaß über der Auflösung, welche den Verlauf des Kontrastmaßes über der Auflösung charakterisiert. Durch Vergleich dieser Größe mit wenigstens einem Grenzwert wird die Unschärfe des Bildes bestimmt. Reicht zur Sichtbehinderungserkennung, insbesondere im Hinblick auf die in den nachfolgenden Systemen geplanten Reaktionsmaßnahmen, aus, festzustellen, dass das Bild unscharf ist, so wird die ermittelte Größe mit einem Grenzwert verglichen, bei dessen Überschreiten von einer Unschärfe ausgegangen wird, oder die Größe selbst als Umschärfemaß weitergegeben wird. In anderen Anwendungen ist es erwünscht, ein Maß für die Unschärfe festzustellen. In diesen Fällen werden durch Grenzwerte Bereiche für die das Kontrastspektrum charakterisierende Größe gebildet, welchen Unschärfewerten zugeordnet sind. Ein Wert für die Höhe der Unschärfe wird ermittelt, wenn die das Kontrastspektrum charakterisierende Größe in einen bestimmten Größenbereich fällt.

Neben der Messung der Unschärfe über das Kontrastspektrum liegen eine weitere Reihe von Verfahren aus der digitalen Bildverarbeitung vor, mit deren Hilfe eine Unschärfe erfaßt werden kann. Beispiele für derartige alternative Verfahren zur Messung der Bildunschärfe sind Maßnahmen zur Analyse des Fourierspektrums oder der Autokorrelation des untersuchten Bildes. Im Fourierspektrum zeigt sich ein unscharfes Bild dadurch, dass die Amplituden der hohen Raumfrequenzen, die die feineren Bilddetails repräsentieren, im Vergleich zu einem scharfen Bild stark abgeschwächt sind.

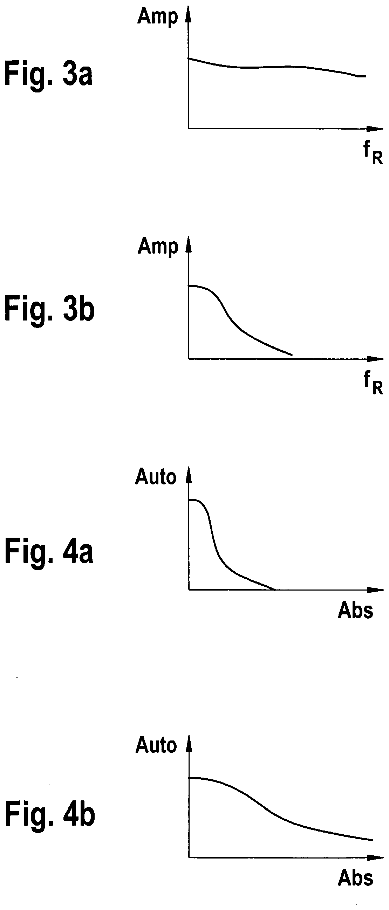

Beispiele für eine solche Situation zeigen die Figuren 3a und 3b. In beiden ist der Verlauf des Fourierspektrums aufgetragen, wobei die Amplitude der Fouriertransformationsfunktion über der Raumfrequenz dargestellt ist. Figur 3a zeigt dabei ein Bild mit geringer Unschärfe, während in Figur 3b ein Bild hoher Unschärfe gezeigt wird. Es zeigt sich deutlich, dass die Amplituden der höheren Raumfrequenz bei einem unscharfen Bild stark abnehmen. Zur Auswertung ist in einem bevorzugten Ausführungsbeispiel daher vorgesehen, das Unterschreiten eines Schwellenwertes durch die Amplitude und die dazugehörige Raumfrequenz zu erkennen. Ist diese Raumfrequenz unterhalb eines vorbestimmten Wertes, wird von einem unscharfen Bild ausgegangen. In einer anderen Ausführung könnte auch hier die Steigung der Kurve unter Vergleich mit wenigstens einem Grenzwert zur Unschärfeermittlung herangezogen werden. Auch bei der Auswertung des Fourierspektrums ist es möglich, durch die Vorgabe mehrerer Grenzwerte, bzw. durch Vorgabe von Wertebereichen einen Wert für die Höhe der Unschärfe festzustellen und an nachfolgende Systeme weiterzugeben.

Eine dritte Möglichkeit zur Unschärfemessung stellt die Autokorrelationsfunktion des Bildes dar. Diese nimmt bei einem unscharfen Bild weniger stark mit der Entfernung ab als bei einem scharfen Bild. Dies deshalb, weil in einem unscharfen Bild nur großräumige Strukturen erhalten bleiben. Figur 4 zeigt dieses Verhalten, wobei jeweils die Höhe der Autokorrelationsfunktion über dem Pixelabstand aufgetragen ist. Figur 4a zeigt dabei die Autokorrelationsfunktion bei einem Bild geringer Unschärfe, Figur 4b die eines Bildes mit hoher Unschärfe. Es zeigt sich, dass mit zunehmendem Pixelabstand bei einem Bild geringer Unschärfe (scharfes Bild) die Autokorrelationsfunktion schnell abnimmt, während bei einem unscharfen Bild die Autokorrelationsfunktion weniger stark abnimmt. Zur Auswertung kann wie oben angedeutet zum einen das Unter- oder Überschreiten wenigstens eines Grenzwertes oder mehrerer Grenzwerte oder in einem anderen Ausführungsbeispiel die errechnete mittlere Steigung zur Bestimmung der Unschärfe und/oder zur Bestimmung eines Wertes für die Größe der Unschärfe herangezogen werden.

Als weitere Alternative zur Unschärfemessung bietet sich ferner ein indirekter Klassifikationsansatz an, bei dem eine Lernmaschine, z.B. ein neuronales Netz oder ein Polynomklassifikator, durch Präsentation einer großen Menge von Beispielbildern darauf trainiert wird, unscharfe von scharfen Bildern zu unterscheiden.

Wie oben erwähnt wird eine Sichtbehinderung angenommen, wenn eine hohe Unschärfe erkannt ist bzw. der Wert der Unschärfe über einem vorgegebenen Wert liegt. Zusätzlich kann einen Vergleich mit Referenzverteilungen für Kontraste, Fourierkomponenten oder Autokorrelationen verschiedene Arten der Sichtbehinderung anhand ihrer Ähnlichkeit mit bestimmten Referenzverteilungen unterschieden werden. Auf diese Weise kann erreicht werden, dass Nässe auf der Scheibe von Eis oder Staub auf der Scheibe unterschieden werden kann und entsprechend der Situation unterschiedliche Gegenmaßnahmen, beispielsweise Aktivieren des Scheibenwischers, Einschalten einer Scheibenheizanlage, eine Scheibenwaschanlage, etc. Auch hier bietet sich der oben erwähnte Klassifikationsansatz mit Lernmaschinen an.

Wird der Videosensor mit Sichtbehinderungsdetektion zusätzlich als Regensensor betrieben, sind weitere Ergänzungen zweckmäßig. Wird Feuchtigkeit auf der Scheibe erkannt anhand der ermittelten Unschärfe und der Kontrastverteilung bzw. dem Fourierspektrum oder der Autokorrelation, so wird die erstmalige Ansteuerung des Scheibenwischers wie bisher nur auf explizite Anforderung des Fahrers erfolgen, um irrtümliche Inbetriebnahme bei einer Fehldetektion auszuschließen. Aus den Videobildern, die unmittelbar nach dem Wischvorgang aufgenommen werden, können die oben erwähnten Referenzverteilungen gewonnen werden, mit denen über die Einleitung des nächsten Wischvorgangs entschieden wird. Damit ist eine situationsspezifische Adaption des Wischverhaltens möglich. In Situationen, in denen die umgebende Szene zu wenig Kontraste enthält, beispielsweise nachts, könnte das kurzzeitige Einschalten einer Scheibenbeleuchtung sinnvoll sein. Sichtbehinderungen sind dann aus der Streuung des Beleuchtungslichts detektierbar.

## Patentansprüche

1. Verfahren zur Erkennung von Sichtbehinderungen bei Bildsensorsystemen eines Kraftfahrzeugs, wobei ein von einem Bildsensor (3) aufgenommenes Bild unter Verwendung einer Auswerteeinheit (7) analysiert wird, wobei durch Analyse des aufgenommenen Bildes das Vorliegen und gegebenenfalls die Art einer Sichtbehinderung erkannt wird, wobei die Analyse des aufgenommenen Bildes in der Messung der Bildunschärfe besteht, wobei unter Verwendung eines Entscheidungsmoduls (6) der Auswerteeinheit (7) ein Signal gebildet wird, welches das Vorliegen der Sichtbehinderung und gegebenenfalls die Art der Sichtbehinderung anzeigt, wobei der Bildsensor (3) auf den Außenbereich des Kraftfahrzeugs fokussiert ist, wobei der Bildsensor (3) hinter einer Fahrzeugscheibe (1) angebracht ist und auf den Außenraum hinter der Fahrzeugscheibe (1) fokussiert und Objekte auf der Fahrzeugscheibe unscharf abgebildet werden, wobei das Signal an nachfolgende Systeme weitergegeben wird, **dadurch gekennzeichnet, dass** ein nachfolgendes System zur Sensierung des Umfeldes des Kraftfahrzeugs oder zur Spurhaltung nur bei ausreichender Sicht bestimmungsgemäß funktioniert, wobei das nachfolgende System zur Sensierung des Umfeldes des Kraftfahrzeugs oder zur Spurhaltung Bilder des Bildsensors (3) auswertet, jedoch bei einer erkannten Sichtbehinderung das aufgenommene Bild nicht auswertet.

2. Verfahren nach Anspruch 1, **dadurch gekennzeichnet, dass** die Unschärfemessung auf der Basis des Kontrastspektrums des Bildes, wobei ein über einer Auflösung aufgetragenes Kontrastmaß das Kontrastspektrum des Bildes bildet, oder auf der Basis des Fourierspektrums oder auf der Basis der Autokorrelationsfunktion des Bildes erfolgt.

3. Verfahren nach einem der Ansprüche 1 oder 2, **dadurch gekennzeichnet, dass** aus der gemessenen Unschärfeverteilung mittels eines Vergleichs mit Referenzverteilungen entschieden wird, ob eine Sichtbehinderung und gegebenenfalls welche Sichtbehinderung vorliegt.

4. Verfahren nach einem der vorhergehenden Ansprüche **dadurch gekennzeichnet, dass** bei einem Kraftfahrzeug nach einem erstmaligen Wischvorgang der Frontscheibe (1) aus nachfolgend aufgenommenen Bildern über die Einleitung des nächsten Wischvorgangs entschieden wird.

5. Verfahren nach Anspruch 4, **dadurch gekennzeichnet, dass** die Entscheidung über den nächsten Wischvorgang anhand der Unschärfe der aktuell aufgenommenen Bilder im Vergleich zur Unschärfe eines Bildes, welches unmittelbar nach einem Wischvorgang aufgenommen wurde, entschieden wird.

6. Verfahren nach einem der vorhergehenden Ansprüche **dadurch gekennzeichnet, dass** eine Scheibenbeleuchtung eingeschaltet wird, wenn die das Fahrzeug umgebende Szene zu wenig Kontraste enthalt.

7. Vorrichtung zur Erkennung von Sichtbehinderungen bei Bildsensorsystemen eines Kraftfahrzeugs mit einem Bildsensor (3), einem nachfolgenden System zur Objektdetektion oder Spurhaltung und einer Auswerteeinheit (7), welche das vom Bildsensor (3) aufgenommene Bild analysiert, wobei die Analyse des aufgenommenen Bildes in der Messung der Bildunschärfe besteht, wobei die Auswerteeinheit (7) ein Signal ausgibt, welches das Vorhandensein einer Sichtbehinderung und gegebenenfalls die Art der Sichtbehinderung anzeigt, wobei das Signal unter Verwendung eines Entscheidungsmoduls (6) der Auswerteeinheit (7) nach Maßgabe der Analyse des aufgenommenen Bildes gebildet wird, wobei der Bildsensor (3) auf den Außenbereich des Kraftfahrzeugs fokussiert ist, wobei der Bildsensor (3) hinter einer Fahrzeugscheibe (1) angebracht ist und auf den Außenraum hinter der Fahrzeugscheibe (1) fokussiert und Objekte auf der Fahrzeugscheibe unscharf abgebildet werden, wobei die Auswerteeinheit (7) das Signal an das nachfolgende System weitergibt, **dadurch gekennzeichnet, dass** das nachfolgende System zur Sensierung des Umfeldes des Kraftfahrzeugs oder zur Spurhaltung nur bei ausreichender Sicht bestimmungsgemäß funktioniert, wobei das nachfolgende System zur Sensierung des Umfeldes des Kraftfahrzeugs oder zur Spurhaltung Bilder des Bildsensors (3) auswertet, jedoch bei einer erkannten Sichtbehinderung das aufgenommene Bild nicht auswertet oder korrigiert.

## Claims

1. Method for identifying obstructions of view in image sensor systems of a motor vehicle, wherein an image, which has been recorded by an image sensor (3), is analysed using an evaluation unit (7), wherein the presence and possibly the type of an obstruction of view is identified by way of the analysis of the recorded image, wherein the analysis of the recorded image consists of measuring the image unsharpness, wherein a signal indicating the presence of the obstruction of view and possibly the type of the obstruction of view is generated using a decision module (6) of the evaluation unit (7), wherein the image sensor (3) is focused at the area outside the motor vehicle, wherein the image sensor (3) is mounted behind a vehicle pane (1) and is focused at the external space behind the vehicle pane (1) and objects are imaged unsharply onto the vehicle pane, wherein the signal is transmitted to subsequent systems, **characterized in that** a subsequent system functions appropriately for sensing the vicinity of the motor vehicle or for keeping lane only if visibility is sufficient, wherein the subsequent system for sensing the vicinity of the motor vehicle or for keeping lane evaluates images of the image sensor (3) but does not evaluate the recorded image if an obstruction of view is identified.

2. Method according to Claim 1, **characterized in that** the unsharpness measurement takes place based on the contrast spectrum of the image, wherein a measure of contrast plotted over a resolution forms the contrast spectrum of the image, or based on the Fourier spectrum or based on the autocorrelation function of the image.

3. Method according to either of Claims 1 and 2, **characterized in that** a decision is made, based on the measured unsharpness distribution using a comparison to reference distributions, as to whether an obstruction of view exists and possibly as to the type of obstruction of view.

4. Method according to one of the preceding claims, **characterized in that**, after a first wiping operation of the windscreen (1) in a motor vehicle, a decision is made based on subsequently recorded images as to the initiation of the next wiping operation.

5. Method according to Claim 4, **characterized in that** the decision relating to the next wiping operation is made based on the unsharpness of the currently recorded images as compared to the unsharpness of an image that was recorded immediately after a wiping operation.

6. Method according to one of the preceding claims, **characterized in that** a pane illumination is switched on if the scene surrounding the vehicle contains too few contrasts.

7. Apparatus for identifying obstructions of view in image sensor systems of a motor vehicle, having an image sensor (3), a subsequent system for object detection or keeping lane, and an evaluation unit (7), which analyses the image recorded by the image sensor (3), wherein the analysis of the recorded image consists of measuring the image unsharpness, wherein the evaluation unit (7) outputs a signal indicating the presence of an obstruction of view and possibly the type of the obstruction of view, wherein the signal is generated in accordance with the analysis of the recorded image using a decision module (6) of the evaluation unit (7), wherein the image sensor (3) is focused at the area outside the motor vehicle, wherein the image sensor (3) is mounted behind a vehicle pane (1) and is focused at the external space behind the vehicle pane (1) and objects are imaged unsharply onto the vehicle pane, wherein the evaluation unit (7) transmits the signal to the subsequent system, **characterized in that** the subsequent system functions appropriately for sensing the vicinity of the motor vehicle or for keeping lane only if visibility is sufficient, wherein the subsequent system for sensing the vicinity of the motor vehicle or for keeping lane evaluates images of the image sensor (3) but does not evaluate or correct the recorded image if an obstruction of view is identified.

## Revendications

1. Procédé de détection d'obstacles à la visibilité dans le cas de systèmes de détection d'images d'un véhicule automobile, dans lequel une image acquise par un capteur d'image (3) est analysée à l'aide d'une unité d'évaluation (7), dans lequel la présence et, le cas échéant, la nature de l'obstacle à la visibilité est détectée au moyen de l'analyse de l'image acquise, dans lequel l'analyse de l'image acquise consiste à mesurer le flou d'image, dans lequel un signal est généré à l'aide d'un module de décision (6) de l'unité d'évaluation (7), lequel signal indique la présence de l'obstacle à la visibilité et, le cas échéant, la nature de l'obstacle à la visibilité, dans lequel le capteur d'image (3) est focalisé sur la zone extérieure du véhicule automobile, dans lequel le capteur d'image (3) est monté derrière une vitre de véhicule (1) et se focalise sur l'espace extérieur situé derrière la vitre de véhicule (1) et des objets sont représentés de manière floue sur la vitre de véhicule, dans lequel le signal est transmis à des systèmes aval, **caractérisé en ce qu'**un système aval destiné à la détection de l'environnement du véhicule automobile ou au suivi de trajectoire ne fonctionne comme prévu que lorsque la visibilité est suffisante, dans lequel le système aval destiné à détecter l'environnement du véhicule automobile ou au suivi de trajectoire évalue des images du capteur d'image (3) mais n'évalue pas l'image acquise lorsqu'un obstacle à la visibilité est détecté.

2. Procédé selon la revendication 1, **caractérisé en ce que** la mesure de flou est effectuée sur la base du spectre de contraste de l'image, une mesure de contraste en fonction de résolution formant le spectre de contraste de l'image, ou sur la base du spectre de Fourier ou sur la base de la fonction d'autocorrélation de l'image.

3. Procédé selon l'une des revendications 1 ou 2, **caractérisé en ce qu'**il est décidé, à partir de la distribution de flou mesurée au moyen d'une comparaison avec des distributions de référence, si un obstacle à la visibilité est présent et le cas échéant, de quel obstacle à la visibilité il s'agit.

4. Procédé selon l'une des revendications précédentes, **caractérisé en ce qu'**il est décidé, dans un véhicule automobile, après une première opération d'essuyage du pare-brise (1), de déclencher la prochaine opération d'essuyage sur la base d'images acquises ensuite.

5. Procédé selon la revendication 4, **caractérisé en ce que** la décision concernant la prochaine opération d'essuyage est prise sur la base du flou des images actuellement acquises par comparaison au flou d'une image ayant été acquise immédiatement après une opération d'essuyage.

6. Procédé selon l'une des revendications précédentes, **caractérisé en ce qu'**un éclairage de vitre est activé lorsque la scène environnant le véhicule présente trop peu de contraste.

7. Dispositif de détection d'obstacles à la vision dans le cas systèmes de détection d'images d'un véhicule automobile, comprenant un capteur d'image (3), un système aval destiné à la détection d'objets ou au suivi de trajectoire, et une unité d'évaluation (7) qui analyse l'image acquise par le capteur d'image (3), dans lequel l'analyse de l'image acquise consiste à mesurer le flou d'image, dans lequel l'unité d'évaluation (7) délivre un signal indiquant la présence d'un obstacle à la visibilité et le cas échéant, la nature de l'obstacle à la visibilité, dans lequel le signal est généré sur la base de l'analyse de l'image acquise à l'aide d'un module de décision (6) de l'unité d'évaluation (7), dans lequel le capteur d'image (3) est focalisé sur la zone extérieure du véhicule automobile, dans lequel le capteur d'image (3) est monté derrière une vitre de véhicule (1) et se focalise sur l'espace extérieur situé derrière la vitre de véhicule (1) et des objets sont représentés de manière floue sur la vitre de véhicule, dans lequel l'unité d'évaluation (7) transmet le signal au système aval, **caractérisé en ce que** le système aval destiné à la détection de l'environnement du véhicule automobile ou au suivi de trajectoire ne fonctionne comme prévu que dans le cas d'une visibilité suffisante, dans lequel le système aval destiné à la détection de l'environnement du véhicule automobile ou au suivi de trajectoire évalue des images du capteur d'image (3), mais n'évalue pas ou ne corrige pas l'image acquise lorsqu'un obstacle à la visibilité est détecté.
